# EUROPEAN PATENT APPLICATION

(11) **EP 3 825 351 A1**
(43) Date of publication of application: **26.05.2021**
(21) Application number: 19210545.0
(22) Date of filing: 21.11.2019
(51) Int. Cl.: C08J 5/06

(54) **COMPOSITES WITH IMPROVED ADHESION AND MECHANICAL PERFORMANCE**

(71) Applicant: SABIC Global Technologies B.V., 4612 PX Bergen op Zoom (NL)
(72) Inventor: Farrell, Tony, 4612 PX Bergen op Zoom (NL)
(74) Representative: Modiano, Micaela Nadia

(57) **Abstract**

A composite including a product of a reactive fiber system and a reactive polymer composition, wherein the reactive fiber system includes: a non-woven fiber; and a binder including a binder reactive functional group, and the reactive polymer composition includes a thermoplastic polymer including a polymer reactive group, wherein the polymer reactive group is reactive with the binder reactive functional group; and wherein the composite includes a modified thermoplastic polymer including a reaction product of the polymer reactive group and the binder reactive functional group.

## Description

### BACKGROUND

This disclosure is directed to methods for improving the adhesion and mechanical strength of a composite, and the composites formed by the methods.

Composite laminates can be used to form structures having advantageous structural characteristics, such as high strengths, high stiffnesses, or the like, as well as relatively low weights when compared to similar structures formed from conventional materials. As a result, composite laminates are used in a variety of applications across a wide range of industries, including the automotive, aerospace, and consumer electronics industries.

Structural characteristics of a laminate can depend heavily on interfacial properties of the fibers and the matrix material, such as wettability and adhesion. For example, poor wettability can cause insufficient impregnation of the fibers with the matrix material during production of the laminate, resulting in unpredictable or undesirable characteristics in the laminate. For further example, poor adhesion can reduce the strength or stiffness of the laminate by, for example, encouraging debonding between the fibers and the polymeric matrix material under stress or external forces.

### BRIEF DESCRIPTION

Provided is a composite including a product of a reactive fiber system and a reactive polymer composition, wherein the reactive fiber system includes: a non-woven fiber; and a binder including a binder reactive functional group, and the reactive polymer composition includes a thermoplastic polymer including a polymer reactive group, wherein the polymer reactive group is reactive with the binder reactive functional group; and wherein the composite includes a modified thermoplastic polymer including a reaction product of the polymer reactive group and the binder reactive functional group.

Also provided is a method of making the composite, the method including: heating the reactive fiber system and the reactive polymer composition under conditions effective to form the modified thermoplastic polymer.

Further provided is an article including the composite.

The above described and other features are exemplified by the following figures and detailed description.

### BRIEF DESCRIPTION OF THE DRAWINGS

FIG. 1 schematically shows a composite precursor including a reactive fiber system and a reactive polymer composition and the formation of a composite including a modified thermoplastic polymer in accordance with one or more aspects of the disclosure.
FIG. 2 is a photograph of a laminate composite according to an aspect of the present disclosure.
FIG. 3 is a photograph of a laminate composite according to a comparative example as described herein.

### DETAILED DESCRIPTION

The present disclosure relates to composites derived from a reactive fiber system and a thermoplastic polymer, methods of preparing the composites, and articles including the composites. The reactive fiber system is obtained from a non-woven fiber and a reactive binder. The composite is processed to form a covalent bond between the reactive fiber system and a reactive group of the thermoplastic polymer, resulting in the formation of a modified thermoplastic polymer. The covalent bonds increase the compatibility and interfacial adhesion between the thermoplastic polymer composition (i.e., the matrix) and the reactive fiber system thereby enhancing the performance of the composite under stress forces. This improved adhesion between the fibers and the matrix also gives a better strength to density ratio, which is highly desired in technologies where the weight of the part is important such as in automotive, aircraft, and rail applications.

Disclosed in various aspects herein is a composite including a product of a reactive fiber system and a reactive polymer composition. In the composite, the reactive fiber system includes a non-woven fiber and a binder including a binder reactive functional group. The reactive polymer composition includes a thermoplastic polymer including a polymer reactive group, wherein the polymer reactive group is reactive with the binder reactive functional group. The composite includes a modified thermoplastic polymer including a reaction product of the polymer reactive group and the binder reactive functional group.

As used herein, the term "polymer reactive group" refers to a reactive group of the thermoplastic polymer. The polymer reactive group can be attached to the thermoplastic polymer, and as a residue of the corresponding modified thermoplastic polymer, as an end group, as a pendant moiety, as a functional group of the polymer backbone, or a combination thereof. Thus, the end group, the pendant moiety, the functional group of the polymer backbone, or a combination thereof includes the polymer reactive group.

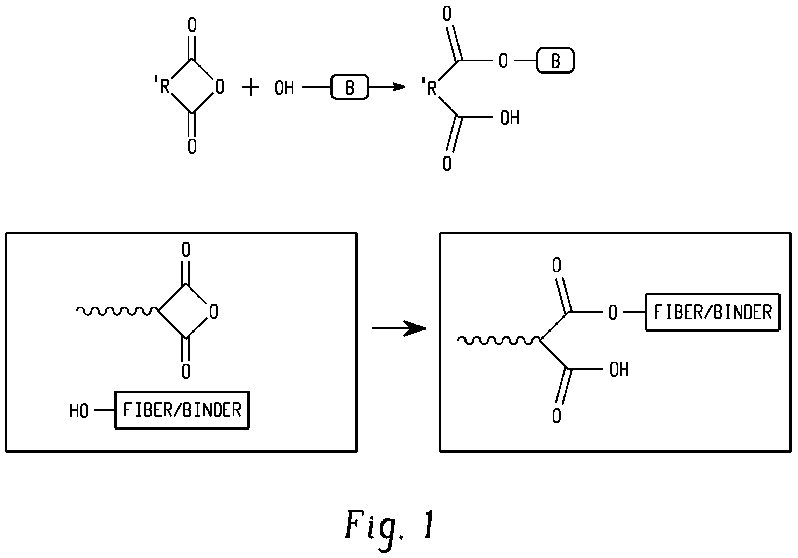

FIG. 1 schematically shows a composite precursor (left side) including a reactive fiber system and the thermoplastic polymer of a reactive polymer composition in accordance with an exemplary aspect. In the exemplary aspect of FIG. 1, the thermoplastic polymer is a polyimide, the polymer reactive group is an anhydride, and the reactive fiber system includes polyvinyl alcohol. In this aspect, subsequent processing of the composite precursor using the conditions described herein results in the formation of the composite (right side) that includes the modified thermoplastic polymer. For simplicity, the unreacted thermoplastic polymer in the composite is not shown.

In the composite, the weight average molecular weight (M_{w}) of the thermoplastic polymer prior to composite formation can be substantially the same as a M_{w} of the thermoplastic polymer after composite formation, as determined by gel permeation chromatography (GPC). For example, the M_{w} of the thermoplastic polymer prior to composite formation can be within 8% of the M_{w} of the thermoplastic polymer after composite formation. For example, the M_{w} of the thermoplastic polymer prior to composite formation can be within 5% of the M_{w} of the thermoplastic polymer after composite formation. For example, the M_{w} of the thermoplastic polymer prior to composite formation can be within 4% of the M_{w} of the thermoplastic polymer after composite formation. For example, the M_{w} of the thermoplastic polymer prior to composite formation can be within 3% of the M_{w} of the thermoplastic polymer after composite formation. It is to be understood that the term "within 8% of the M_{w}" means the difference in M_{w} is ± 8% and the term "within 4% of the M_{w}" means the difference in M_{w} is ± 4%, with the same definition applying to the other exemplary differences in M_{w}. GPC can be performed a crosslinked divinyl benzene column and polystyrene standards.

The polymer reactive group of the modified thermoplastic polymer can be covalently bonded to the reactive fiber system. For example, the modified thermoplastic polymer can be derived from reaction of the polymer reactive group and the binder reactive functional group to form a covalent bond. For example, the covalent bond can be formed between, or can be between, the residue derived from the binder reactive functional group and the residue derived from the polymer reactive group of the thermoplastic polymer. It is to be understood that when the polymer reactive group is reacted with the binder reactive functional group to form the modified thermoplastic polymer, the binder including the binder reactive functional group is disposed on, for example is coated on, the non-woven fiber in the fiber reactive system. Thus, the covalent bond formed is between the modified thermoplastic polymer and the fiber reactive system, which increases the compatibility and interfacial adhesion between the matrix (i.e., the reactive polymer composition and the modified thermoplastic polymer) and the reactive fiber system of the composite.

In an aspect, 5 to 90 wt%, or 15 to 90 wt% of the composite can be the modified thermoplastic polymer, based on the total weight of the reactive polymer composition and the modified thermoplastic polymer. For example, 5 to 90 wt%, or 15 to 90 wt% of the composite can be the modified thermoplastic polymer, based on the total weight of the thermoplastic polymer and the modified thermoplastic polymer.

The total amount of the thermoplastic polymer and the modified thermoplastic polymer in the composite can be substantially the same as the amount of thermoplastic polymer in the composite precursor, or for example the same amount. The "composite precursor" is a combination of the reactive fiber system and the reactive polymer composition before forming the modified thermoplastic polymer.

At least a portion, or an amount, of the thermoplastic polymer of the reactive polymer composition in the composite precursor has a polymer reactive group that reacts with, or has been reacted with, the binder reactive functional group to form the modified thermoplastic polymer. In an aspect, 5 to 90 wt%, or 15 to 90 wt% of the thermoplastic polymer present in the reactive polymer composition of a composite precursor reacts with the binder reactive functional group to form the modified thermoplastic polymer of the composite. It is to be understood that the modified thermoplastic polymer described in this paragraph can also be referred to as the "first modified thermoplastic polymer".

In an aspect, the composite can further include a product of a further reaction between a polymer reactive group of the first modified thermoplastic polymer and another component of the composite, where the first modified thermoplastic polymer further includes an unreacted polymer reactive group. As used herein, "unreacted polymer reactive group" is a polymer reactive group of the thermoplastic polymer that was not reacted with the binder reactive functional groups during formation of the modified thermoplastic polymer. For example, the thermoplastic polymer can include two or more polymer reactive groups, wherein a first polymer reactive group reacts with the binder reactive functional group to form the modified thermoplastic polymer, wherein the modified thermoplastic polymer includes the unreacted polymer reactive group(s) from the thermoplastic polymer.

In an aspect, the polymer reactive group of the modified thermoplastic polymer can react with the binder reactive functional group, an additive, the non-woven fiber, another component, or a combination thereof, to form an additional modified thermoplastic polymer, which can also be referred to herein as the "second modified thermoplastic polymer". In an aspect, the total amount of the thermoplastic polymer, the first modified thermoplastic polymer, and the second modified thermoplastic polymer in the composite can be substantially the same as the amount of the reactive polymer composition of the composite precursor, or for example the same amount. In an aspect, the total amount of the thermoplastic polymer, the first modified thermoplastic polymer, and the second modified thermoplastic polymer in the composite can be substantially the same as the amount of thermoplastic polymer in the composite precursor, or for example the same amount.

In an aspect, a polymer reactive group of the second modified thermoplastic polymer can be reactive with, or further react with, the binder reactive functional group, a second thermoplastic polymer, an additive, the non-woven fiber, another component, or a combination thereof, to form another modified thermoplastic polymer, for example a third, a fourth, a fifth, or the like modified thermoplastic polymer(s). In an aspect, the total amount of the thermoplastic polymer, the first modified thermoplastic polymer, the second modified thermoplastic polymer, and the third, fourth, fifth, or more modified thermoplastic polymer(s) in the composite can be substantially the same as the amount of the reactive polymer composition in the composite precursor, or for example the same amount. In an aspect, the total amount of the thermoplastic polymer, the first modified thermoplastic polymer, the second modified thermoplastic polymer, and the third, fourth, fifth, or more modified thermoplastic polymer(s) in the composite can be substantially the same as the amount of the thermoplastic polymer in the composite precursor, or for example the same amount.

The composite precursor can include 10 to 80 wt% of the reactive fiber system, based on the total weight of the composite precursor. For example, the composite precursor can include 10 to 60 wt% or 10 to 50 wt% of the reactive fiber system, based on the total weight of the composite precursor.

In an aspect, the product of the reactive fiber system and the reactive polymer composition can be derived from 10 to 80 wt% of the reactive fiber system, based on the total weight of the reactive fiber system and the reactive polymer composition used to prepare the product. For example, the product can be derived from 10 to 60 wt% or 10 to 50 wt% of the reactive fiber system.

The surface density (i.e., areal density) of the reactive fiber system is not particularly limited. For example, the reactive fiber system can have a surface density of 30 to 200 grams per square meter (g/m²), or 40 to 180 g/m², or 40 to 150 g/m².

The reactive fiber system is derived from a non-woven fiber. It is to be understood herein that the reactive fiber system includes a plurality of non-woven fibers that have been pre-processed with the binder. For example, the reactive fiber system can be derived from 80 to 99 wt%, or 85 to 97 wt%, or 85 to 95 wt% of the non-woven fiber, based on the total weight of the non-woven fiber and the binder. The term "non-woven fiber" can be used interchangeably with the term "plurality of non-woven fibers".

The non-woven fiber can be a mineral fiber, a plant fiber, a synthetic fiber, or a combination thereof. Exemplary non-woven fiber includes, but is not limited to, glass fiber, glass wool fiber, mineral wool fiber, slag wool fiber, stone wool fiber, basalt fiber, silica fiber, quartz fiber, alumina fiber, steel fiber, silicon carbide fiber, acrylic fiber, carbon fiber, melamine fiber, polyester fiber, polyethylene fiber, polyethylene terephthalate fiber, polylactic acid fiber, polypropylene fiber, polyamide fiber, polyaramid fiber, polyimide fiber, polyphenylene sulfide fiber, polytetrafluoroethylene fiber, cellulosic fiber, cotton fiber, jute fiber, kenaf fiber, bamboo fiber, hemp fiber, linen fiber, and flax fiber. A combination of two or more non-woven fibers can be used. The non-woven fiber can be a carbon fiber.

The glass fiber can be E, A, C, ECR, R, S, D, or NE glass, or the like, or a combination thereof. The glass fibers can be made by standard processes, e.g., by steam or air blowing, flame blowing, and mechanical pulling. Exemplary glass fibers are made by mechanical pulling.

The fiber can be continuous or chopped. Fibers in the form of chopped strands can have a length of 0.3 millimeters (mm) to 10 centimeters (cm), or 0.5 mm to 5 cm, or 1.0 mm to 2.5 cm. For example, the fiber can have a length from 0.2-20 mm, or 0.2-10 mm, or 0.7-7 mm. The fibers can have any cross-section, such as a round (or circular), flat, or irregular cross-section. For example, the fiber has a circular cross-section. The diameter of the fiber can be from 1-25 micrometers (µm), or 3-20 µm, or 4-18 µm, or 5-17 µm. For example, the fiber can be a short glass fiber having a diameter of 10 µm. Flat glass or bilobe fibers can be used to provide, for example, low warp-high strength articles.

The non-woven fiber is processed with, or coated with, a binder including a binder reactive functional group to form the reactive fiber system. For example, the reactive fiber system can be a wet laid mat of non-woven fibers and binder. The choice of binder is not particularly limited, provided the binder compound includes the binder reactive functional group. The binder reactive functional group can be hydroxyl, carboxyl, carboxylic anhydride, haloformyl, epoxy, silanol, amino, mercapto, vinyl, or a combination thereof. The binder reactive functional group, and the corresponding binder compound, can be selected based on the thermoplastic polymer of the reactive polymer composition and its associated reactivity. Commercially available fiber/binder systems can be used.

The binder can be a polymer or resin such as polyurethane, siloxane resin, poly(meth)acrylate, polyvinyl alcohol, polyamine, epoxy resin, phenoxy resin, melamine resin, urea resin, mercapto-containing polymer, carboxyl-containing polymer, or the like, or a combination thereof. For example, the binder can be polyvinyl alcohol.

The reactive fiber system can be derived from the non-woven fiber and 1 to 20 wt% of the binder, based on the total weight of the non-woven fiber and the binder. For example, the reactive fiber system is derived from the non-woven fiber and 3 to 15 wt% or 5 to 15 wt% of the binder, based on the total weight of the non-woven fiber and the binder.

The thermoplastic polymer is not particularly limited, and can be any thermoplastic polymer or copolymer that includes polymer reactive group that is reactive with the binder reactive functional group of the reactive fiber system to form a modified thermoplastic polymer.

Thermoplastic polymers include polycarbonate, polyacetal, poly(C₁₋₆ alkyl)acrylate, polyacrylamide, polyamide, polyamideimide, polyanhydride, polyarylate, polyarylene ether, polyarylene sulfide, polyarylene sulfone, polybenzothiazole, polybenzoxazole, polyester, polyetheretherketone, polyetherimide, polyetherketoneketone, polyetherketone, polyethersulfone, polyimide, poly(C₁₋₆ alkyl)methacrylate, polymethacrylamide, polynorbornene, polyolefin, polyoxadiazole, polyoxymethylene, polyphthalide, polysilazane, polysiloxane, polystyrene, polysulfide, polysulfonamide, polysulfonate, polysulfone, polythioester, polytriazine, polyurea, polyurethane, polyvinyl alcohol, polyvinyl ester, polyvinyl ether, polyvinyl halide, polyvinyl ketone, polyvinyl thioether, polyvinylidene fluoride, a copolymer thereof, or a combination thereof. For example, the thermoplastic polymer can be polyester, polycarbonate, polyamide, polyurethane, polyurea, a random or block poly(carbonate ester), poly(carbonate ether), poly(ester ether), poly(carbonate ether ester), poly(ester amide), poly(ester ether amide), poly(carbonate amide), poly(carbonate ether amide), poly(ester urethane), poly(ester ether-urethane), poly(carbonate urethane), poly(carbonate ether urethane), poly(ester urea), poly(ester ether urea), poly(carbonate urea), poly(carbonate ether urea), poly(ether amide), poly(amide urethane), poly(amide urea), poly(urethane urea), poly(arylene ether), or a combination thereof.

In an aspect, the thermoplastic polymer is a polyimide. Polyimides include more than 1, for example 5 to 1000, or 5 to 500, or 10 to 100, structural units of formula (1) 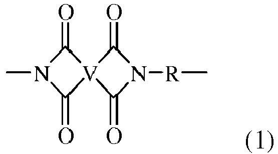 wherein each V is the same or different, and is a substituted or unsubstituted tetravalent C₄₋₄₀ hydrocarbon group, for example a substituted or unsubstituted C₆₋₂₀ aromatic hydrocarbon group, a substituted or unsubstituted, straight or branched chain, saturated or unsaturated C₂₋₂₀ aliphatic group, or a substituted or unsubstituted C₄₋₈ cycloaliphatic group, in particular a substituted or unsubstituted C₆₋₂₀ aromatic hydrocarbon group. Exemplary aromatic hydrocarbon groups include any of those of the formulas 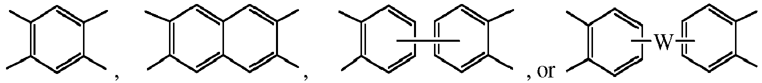 wherein W is -O-, -S-, -C(O)-, -SO₂-, -SO-, a C₁₋₁₈ hydrocarbon moiety that can be cyclic, acyclic, aromatic, or non-aromatic, -P(R^{a})(=O)- wherein R^{a} is a C₁₋₈ alkyl or C₆₋₁₂ aryl, -C_{y}H_{2y}-wherein y is an integer from 1 to 5 or a halogenated derivative thereof (which includes perfluoroalkylene groups), or a group of the formula -O-Z-O- as described in formula (3) below.

Each R in formula (1) is the same or different, and is a substituted or unsubstituted divalent organic group, such as a C₆₋₂₀ aromatic hydrocarbon group or a halogenated derivative thereof, a straight or branched chain C₂₋₂₀ alkylene group or a halogenated derivative thereof, a C₃₋₈ cycloalkylene group or halogenated derivative thereof, in particular a divalent group of formulas (2) 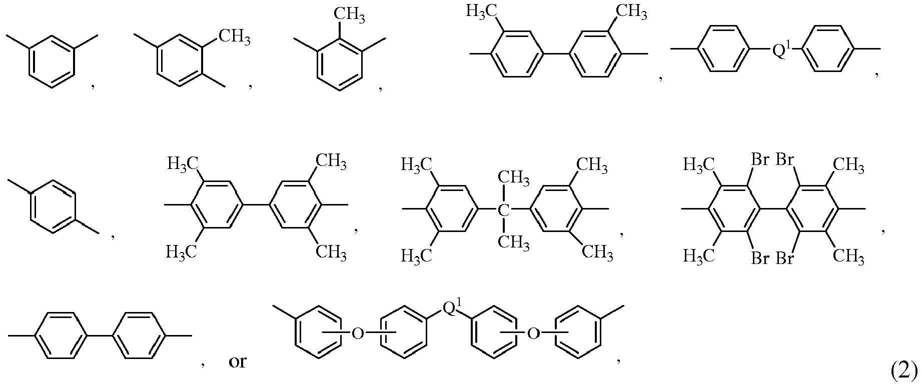 wherein Q¹ is -O-, -S-, -C(O)-, -SO₂-, -SO-, -P(R^{a})(=O)- wherein R^{a} is a C₁₋₈ alkyl or C₆₋₁₂ aryl, - C_{y}H_{2y}- wherein y is an integer from 1 to 5 or a halogenated derivative thereof (which includes perfluoroalkylene groups), or -(C₆H₁₀)_{z}- wherein z is an integer from 1 to 4. In an aspect, R is m-phenylene, p-phenylene, or a diaryl sulfone.

Polyetherimides are a class of polyimides that include more than 1, for example 10 to 1000, or 10 to 500, structural units of formula (3) 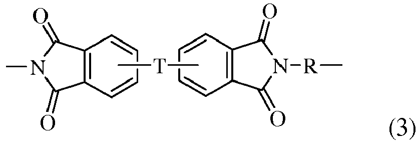 wherein each R is the same or different and is as described in formula (1).

Further in formula (3), T is -O- or a group of the formula -O-Z-O- wherein the divalent bonds of the -O- or the -O-Z-O- group are in the 3,3', 3,4', 4,3', or the 4,4' positions. The group Z in -O-Z-O- of formula (3) is a substituted or unsubstituted divalent organic group, and can be an aromatic C₆₋₂₄ monocyclic or polycyclic moiety optionally substituted with 1 to 6 C₁₋₈ alkyl groups, 1 to 8 halogen atoms, or a combination thereof, provided that the valence of Z is not exceeded. Exemplary groups Z include groups derived from a dihydroxy compound of formula (4) 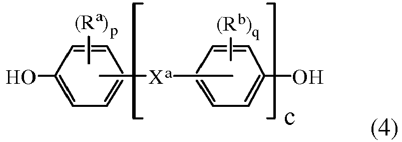 wherein R^{a} and R^{b} can be the same or different and are a halogen atom or a monovalent C₁₋₆ alkyl group, for example; p and q are each independently integers of 0 to 4; c is 0 to 4; and X^{a} is a bridging group connecting the hydroxy-substituted aromatic groups, where the bridging group and the hydroxy substituent of each C₆ arylene group are disposed ortho, meta, or para to each other on the C₆ arylene group. The bridging group X^{a} can be a single bond, -O-, -S-, -S(O)-, - S(O)₂-, -C(O)-, or a C₁₋₁₈ organic bridging group. The C₁₋₁₈ organic bridging group can be cyclic or acyclic, aromatic, or non-aromatic, and can further include heteroatoms such as halogens, oxygen, nitrogen, sulfur, silicon, or phosphorous. The C₁₋₁₈ organic group can be disposed such that the C6 arylene groups connected thereto are each connected to a common alkylidene carbon or to different carbons of the C₁₋₁₈ organic bridging group. A specific example of a group Z is a divalent group of formula (4a) 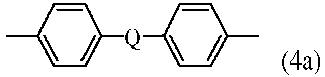 wherein Q is -O-, -S-, -C(O)-, -SO₂-, -SO-, or -C_{y}H_{2y}- wherein y is an integer from 1 to 5 or a halogenated derivative thereof (including a perfluoroalkylene group). In a specific aspect, Z is a derived from bisphenol A, such that Q in formula (3a) is 2,2-isopropylidene.

In an aspect, in formula (3), R is m-phenylene or p-phenylene and T is -O-Z-O-wherein Z is a divalent group of formula (4a). Alternatively, R is m-phenylene or p-phenylene and T is -O-Z-O wherein Z is a divalent group of formula (4a) and Q is 2,2-isopropylidene.

In some aspects, the polyetherimide can be a copolymer, for example, a polyetherimide sulfone copolymer including structural units of formula (1) wherein at least 50 mole% of the R groups are of formula (2) wherein Q¹ is -SO₂- and the remaining R groups are independently p-phenylene or m-phenylene or a combination thereof; and Z is 2,2'-(4-phenylene)isopropylidene.

Alternatively, the polyetherimide copolymer optionally includes additional structural imide units, for example imide units of formula (1) wherein R and V are as described in formula (1), for example V is 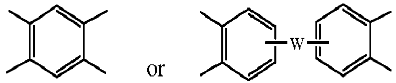 wherein W is a single bond, -O-, -S-, -C(O)-, -SO₂-, -SO-, a C₁₋₁₈ hydrocarbon moiety that can be cyclic, acyclic, aromatic, or non-aromatic, -P(R^{a})(=O)- wherein R^{a} is a C₁₋₈ alkyl or C₆₋₁₂ aryl, or -C_{y}H_{2y}- wherein y is an integer from 1 to 5 or a halogenated derivative thereof (which includes perfluoroalkylene groups). These additional structural imide units can include less than 20 mol% of the total number of units or can be present in amounts of 0 to 10 mol% of the total number of units, or 0 to 5 mol% of the total number of units, or 0 to 2 mol% of the total number of units. In some aspects, no additional imide units are present in the polyetherimide. The polyimide and polyetherimide can be prepared by any of the methods well known to those skilled in the art, including the reaction of an aromatic bis(ether anhydride) of formula (5a) or formula (5b) 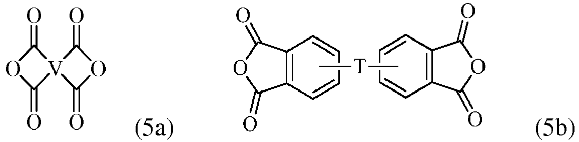 or a chemical equivalent thereof, with an organic diamine of formula (6)

H₂N-R-NH₂ (6)

wherein V, T, and R are defined as described above. Copolymers of the polyetherimides can be manufactured using a combination of an aromatic bis(ether anhydride) of formula (5) and a different bis(anhydride), for example a bis(anhydride) wherein T does not contain an ether functionality, for example T is a sulfone.

Illustrative examples of bis(anhydride)s include 3,3-bis[4-(3,4-dicarboxyphenoxy)phenyl]propane dianhydride; 4,4'-bis(3,4-dicarboxyphenoxy)diphenyl ether dianhydride; 4,4'-bis(3,4-dicarboxyphenoxy)diphenyl sulfide dianhydride; 4,4'-bis(3,4-dicarboxyphenoxy)benzophenone dianhydride; 4,4'-bis(3,4-dicarboxyphenoxy)diphenyl sulfone dianhydride; 2,2-bis[4-(2,3-dicarboxyphenoxy)phenyl]propane dianhydride; 4,4'-bis(2,3-dicarboxyphenoxy)diphenyl ether dianhydride; 4,4'-bis(2,3-dicarboxyphenoxy)diphenyl sulfide dianhydride; 4,4'-bis(2,3-dicarboxyphenoxy)benzophenone dianhydride; 4,4'-bis(2,3-dicarboxyphenoxy)diphenyl sulfone dianhydride; 4-(2,3-dicarboxyphenoxy)-4'-(3,4-dicarboxyphenoxy)diphenyl-2,2-propane dianhydride; 4-(2,3-dicarboxyphenoxy)-4'-(3,4-dicarboxyphenoxy)diphenyl ether dianhydride; 4-(2,3-dicarboxyphenoxy)-4'-(3,4-dicarboxyphenoxy)diphenyl sulfide dianhydride; 4-(2,3-dicarboxyphenoxy)-4'-(3,4-dicarboxyphenoxy)benzophenone dianhydride; and, 4-(2,3-dicarboxyphenoxy)-4'-(3,4-dicarboxyphenoxy)diphenyl sulfone dianhydride, as well as various combinations thereof.

Examples of organic diamines include hexamethylenediamine, polymethylated 1,6-n-hexanediamine, heptamethylenediamine, octamethylenediamine, nonamethylenediamine, decamethylenediamine, 1,12-dodecanediamine, 1,18-octadecanediamine, 3-methylheptamethylenediamine, 4,4-dimethylheptamethylenediamine, 4-methylnonamethylenediamine, 5-methylnonamethylenediamine, 2,5-dimethylhexamethylenediamine, 2,5-dimethylheptamethylenediamine, 2, 2-dimethylpropylenediamine, N-methyl-bis (3-aminopropyl) amine, 3-methoxyhexamethylenediamine, 1,2-bis(3-aminopropoxy) ethane, bis(3-aminopropyl) sulfide, 1,4-cyclohexanediamine, bis-(4-aminocyclohexyl) methane, m-phenylenediamine, p-phenylenediamine, 2,4-diaminotoluene, 2,6-diaminotoluene, m-xylylenediamine, p-xylylenediamine, 2-methyl-4,6-diethyl-1,3-phenylene-diamine, 5-methyl-4,6-diethyl-1,3-phenylene-diamine, benzidine, 3,3'-dimethylbenzidine, 3,3'-dimethoxybenzidine, 1,5-diaminonaphthalene, bis(4-aminophenyl) methane, bis(2-chloro-4-amino-3,5-diethylphenyl) methane, bis(4-aminophenyl) propane, 2,4-bis(p-amino-t-butyl) toluene, bis(p-amino-t-butylphenyl) ether, bis(p-methyl-o-aminophenyl) benzene, bis(p-methyl-o-aminopentyl) benzene, 1, 3-diamino-4-isopropylbenzene, bis(4-aminophenyl) sulfide, bis-(4-aminophenyl) sulfone (also known as 4,4'-diaminodiphenyl sulfone (DDS)), and bis(4-aminophenyl) ether. Any regioisomer of the foregoing compounds can be used. Combinations of these compounds can also be used. In some aspects, the organic diamine is m-phenylenediamine, p-phenylenediamine, 4,4'-diaminodiphenyl sulfone, or a combination thereof.

The polyimides and polyetherimides can have a melt index of 0.1 to 10 grams per minute (g/min), as measured by ASTM D1238 at 340 to 370°C, using a 6.7 kilogram (kg) weight. In some aspects, the polyetherimide polymer has a weight average molecular weight (M_{w}) of 1,000 to 150,000 grams/mole (g/mol), as measured by gel permeation chromatography (GPC), using polystyrene standards. In some aspects, the polyetherimide has an M_{w} of 10,000 to 80,000 g/mol. Such polyetherimide polymers can have an intrinsic viscosity greater than 0.2 deciliters per gram (dL/g), or 0.35 to 0.7 dL/g as measured in m-cresol at 25°C.

The thermoplastic polymer can also include a poly(siloxane-etherimide) copolymer including polyetherimide units of formula (1) and siloxane blocks of formula (7) 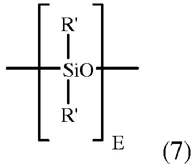 wherein E has an average value of 2 to 100, 2 to 31, 5 to 75, 5 to 60, 5 to 15, or 15 to 40, each R' is independently a C₁₋₁₃ monovalent hydrocarbyl group. For example, each R' can independently be a C₁₋₁₃ alkyl group, C₁₋₁₃ alkoxy group, C₂₋₁₃ alkenyl group, C₂₋₁₃ alkenyloxy group, C₃₋₆ cycloalkyl group, C₃₋₆ cycloalkoxy group, C₆₋₁₄ aryl group, C₆₋₁₀ aryloxy group, C₇₋₁₃ arylalkyl group, C₇₋₁₃ arylalkoxy group, C₇₋₁₃ alkylaryl group, or C₇₋₁₃ alkylaryloxy group. The foregoing groups can be fully or partially halogenated with fluorine, chlorine, bromine, or iodine, or a combination thereof. In an aspect, no bromine or chlorine is present, and in another aspect, no halogens are present. Combinations of the foregoing R groups can be used in the same copolymer. In an aspect, the polysiloxane blocks includes R' groups that have minimal hydrocarbon content. In a specific aspect, an R' group with a minimal hydrocarbon content is a methyl group.

The poly (siloxane-etherimide)s can be formed by polymerization of an aromatic bis(ether anhydride) of formula (5) and a diamine component including an organic diamine (6) as described above or a combination of diamines, and a polysiloxane diamine of formula (8) 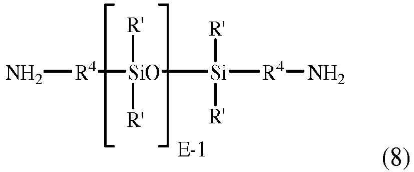 wherein R' and E are as described in formula (7), and R⁴ is each independently a C₂-C₂₀ hydrocarbon, in particular a C₂-C₂₀ arylene, alkylene, or arylenealkylene group. In an aspect, R⁴ is a C₂-C₂₀ alkylene group, or a C₂-C₁₀ alkylene group such as propylene, and E has an average value of 5 to 100, or 5 to 75, or 5 to 60, or 5 to 15, or 15 to 40. Procedures for making the polysiloxane diamines of formula (8) are well known in the art.

In some poly(siloxane-etherimide)s the diamine component can contain 10 to 90 mole percent (mol%), or 20 to 50 mol%, or 25 to 40 mol% of polysiloxane diamine (8) and 10 to 90 mol%, or 50 to 80 mol%, or 60 to 75 mol% of diamine (6), for example as described in US Patent 4,404,350. The diamine components can be physically mixed prior to reaction with the bisanhydride(s), thus forming a substantially random copolymer. Alternatively, block or alternating copolymers can be formed by selective reaction of (6) and (8) with aromatic bis(ether anhydrides (5), to make polyimide blocks that are subsequently reacted together. Thus, the poly(siloxane-imide) copolymer can be a block, random, or graft copolymer. In an aspect, the copolymer is a block copolymer.

Examples of specific poly(siloxane-etherimide)s are described in US Pat. Nos. 4,404,350, 4,808,686 and 4,690,997. In an aspect, the poly(siloxane-etherimide) has units of formula (9) 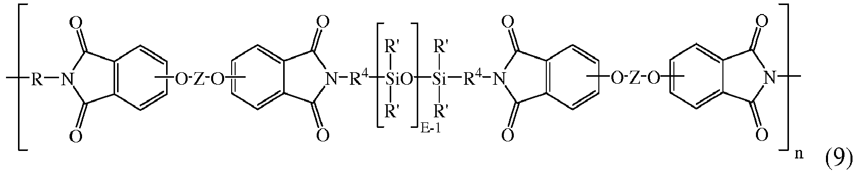 wherein R' and E of the siloxane are as in formula (7), R and Z of the imide are as in formula (1), R⁴ is as in formula (8), and n is an integer from 5 to 100. In a specific aspect, of the poly(siloxane-etherimide), R of the etherimide is a phenylene, Z is a residue of bisphenol A, R⁴ is n-propylene, E is 2 to 50, 5, to 30, or 10 to 40, n is 5 to 100, and each R' of the siloxane is methyl.

The relative amount of polysiloxane units and etherimide units in the poly(siloxane-etherimide) depends on the desired properties and are selected using the guidelines provided herein. As mentioned above, the block or graft poly(siloxane-etherimide) copolymer is selected to have a certain average value of E and is selected and used in amount effective to provide the desired wt% of polysiloxane units in the composition. In an aspect, the poly(siloxane-etherimide) includes 10 to 50 wt%, 10 to 40 wt%, or 20 to 35 wt% polysiloxane units, based on the total weight of the poly(siloxane-etherimide).

In some aspects, the polyimide can be a polyetherimide, such as a polyetherimide including units derived from the reaction of bisphenol A dianhydride and m-phenylene diamine. The polyimide can be a polyetherimide homopolymer, a polyetherimide co-polymer such as a poly(etherimide-siloxane), a poly(etherimide sulfone), or a combination thereof.

The polymer reactive group is a reactive functional group of the thermoplastic polymer. For example, an end group, a pendant moiety, a substituent of the polymer backbone, or a combination thereof can include the polymer reactive group. The polymer reactive group is not particularly limited, and can be, for example, anhydride, amino, hydroxyl, halogen, thiol, aldehyde, C₁₋₆ alkyl ester, carboxyl, epoxy, isocyanate, vinyl, alkynyl, or the like, or a combination thereof. Preferably, the polymer reactive group is anhydride, amino, hydroxyl, or a combination thereof.

The thermoplastic polymer can include more than one polymer reactive group. Each polymer reactive group of the thermoplastic polymer can be the same or different. For example, the thermoplastic polymer can include two, three, four, or more polymer reactive groups that are each the same polymer reactive group.

In another aspect, the thermoplastic polymer can include two, three, four, or more polymer reactive groups, wherein each polymer reactive group is the same or different polymer reactive group. For example, the thermoplastic polymer can include two, three, four, or more of the same or different polymer reactive groups, wherein there are two, three, four, or more occurrences of each of the different polymer reactive groups, such as a thermoplastic polymer including four, sixteen, twenty, thirty, or more total polymer reactive groups. For example, each repeating unit of the thermoplastic polymer can include a polymer reactive group that is the same or different.

In some aspects, an end group (i.e., end cap) includes the polymer reactive group. Exemplary end groups include, but are not limited to, those having reactive functional groups such as anhydride, amino, hydroxyl, or a combination thereof. The hydroxyl-containing end groups include phenolic end groups. In some instances, the end group itself is reactive (e.g., an anhydride end group) and can be the polymer reactive group. These reactive groups are present on the end groups after capping of the thermoplastic polymer. Thus, a multifunctional end capping agent can be used to form the end group of the thermoplastic polymer via a first reactive group and include a second reactive group that is the polymer reactive group of the thermoplastic polymer.

The end groups can be different from the types of monomers or comonomers used to form the backbone of the thermoplastic polymer. For example, a polyimide can include an end group that is not an aromatic or anhydride group, such as an aliphatic end group including the polymer reactive group.

In some aspects, a pendant moiety of the thermoplastic polymer includes the polymer reactive group. Pendant moieties are side chains connected to the backbone of the thermoplastic polymer. Exemplary pendant groups include, but are not limited to, C₁₋₁₀ alkyl, C₃₋₈ cycloalkyl, C₆₋₂₄ aryl, C₄₋₂₀ alkylene ether, or the like, or a combination thereof, and can optionally further include one or more groups such as carbonyl, carboxamido, ester, or the like.

The thermoplastic polymer can include multiple pendant moieties that are the same or different, and each pendant moiety can include a polymer reactive group that is the same or different. Each pendant moiety can include more than one polymer reactive group, and each polymer reactive group on a pendant moiety can be the same or different.

In some aspects, a substituent of the polymer backbone includes the polymer reactive group. For example, the polymer reactive group can be a substituent group of the polymer backbone such as hydroxyl or amino.

In particular aspects, the thermoplastic polymer can include polymer reactive groups that are present on the end groups, the pendant moieties, the polymer backbone, or a combination thereof, wherein each of the polymer reactive groups is the same or different. For example, the thermoplastic polymer can include polymer reactive groups as end groups, as pendant moieties, and as substituents of the polymer backbone, wherein each of the polymer reactive groups is the same or different.

An additive composition can be used, including one or more additives selected to achieve a desired property, with the proviso that the additive(s) are also selected to not significantly adversely affect a desired property of the reactive polymer composition. The additive composition or individual additives can be mixed at a suitable time during the mixing of the components for forming the composition. The additive composition can include an impact modifier, flow modifier, filler (e.g., a particulate polytetrafluoroethylene (PTFE), glass, carbon, mineral, or metal), reinforcing agent (e.g., glass fibers), antioxidant, heat stabilizer, light stabilizer, ultraviolet (UV) light stabilizer, UV absorbing additive, plasticizer, lubricant, release agent (such as a mold release agent), antistatic agent, anti-fog agent, antimicrobial agent, colorant (e.g., a dye or pigment), surface effect additive, radiation stabilizer, flame retardant, anti-drip agent (e.g., a PTFE-encapsulated styrene-acrylonitrile copolymer (TSAN)), or a combination thereof. For example, a combination of a heat stabilizer, mold release agent, and ultraviolet light stabilizer can be used. The additives can be used in the amounts known to be effective. For example, the total amount of the additive composition (other than any impact modifier, filler, or reinforcing agent) can be 0.001 to 10.0 wt%, or 0.01 to 5 wt%, each based on the total weight of the reactive polymer composition.

The thermoplastic composition of the composite can optionally include an additional thermoplastic polymer different from the thermoplastic polymer in the reactive thermoplastic composition. Examples of additional thermoplastic polymers that can be used include polyacetals (e.g., polyoxyethylene and polyoxymethylene), poly(C₁₋₆ alkyl)acrylates, polyacrylamides, polyamides, (e.g., aliphatic polyamides, polyphthalamides, and polyaramides), polyamideimides, polyanhydrides, polyarylates, polyarylene ethers (e.g., polyphenylene ethers), polyarylene sulfides (e.g., polyphenylene sulfides), polyarylene sulfones (e.g., polyphenylene sulfones), polybenzothiazoles, polybenzoxazoles, polycarbonates (including polycarbonate copolymers such as polycarbonate-siloxanes, polycarbonate-esters, and polycarbonate-ester-siloxanes), polyesters (e.g., polyethylene terephthalates, polybutylene terephthalates, polyarylates, and polyester copolymers such as polyester-ethers), polyetheretherketones, polyetherimides (including copolymers such as polyetherimide-siloxane copolymers), polyetherketoneketones, polyetherketones, polyethersulfones, polyimides (including copolymers such as polyimide-siloxane copolymers), poly(C₁₋₆ alkyl)methacrylates, polymethacrylamides, polynorbornenes (including copolymers containing norbornenyl units), polyolefins (e.g., polyethylenes, polypropylenes, polytetrafluoroethylenes, and their copolymers, for example ethylene-alpha-olefin copolymers), polyoxadiazoles, polyoxymethylenes, polyphthalides, polysilazanes, polysiloxanes, polystyrenes (including copolymers such as acrylonitrile-butadiene-styrene (ABS) and methyl methacrylate-butadiene-styrene (MBS)), polysulfides, polysulfonamides, polysulfonates, polysulfones, polythioesters, polytriazines, polyureas, polyurethanes, polyvinyl alcohols, polyvinyl esters, polyvinyl ethers, polyvinyl halides, polyvinyl ketones, polyvinyl thioethers, polyvinylidene fluorides, or the like, or a combination thereof.

In an aspect, the reactive polymer composition can include a catalyst. The catalyst can be an alkali or alkaline earth metal salt of hydroxide, superoxide, thiolate, sulfide, C₁₋₂₀ alkoxide, C₆₋₂₀ aryloxide, C₁₋₂₀ carboxylate, phosphate, phosphonate, phosphite, sulfate, C₁₋₂₀ alkyl or aryl sulfonate, sulfite, or a combination thereof. Exemplary catalysts include, but are not limited to, lithium hydroxide, sodium hydroxide, potassium hydroxide, cesium hydroxide, magnesium hydroxide, calcium hydroxide, barium hydroxide, lithium formate, sodium formate, potassium formate, cesium formate, lithium acetate, sodium acetate, potassium acetate, lithium carbonate, sodium carbonate, potassium carbonate, lithium methoxide, sodium methoxide, potassium methoxide, lithium ethoxide, sodium ethoxide, potassium ethoxide, lithium phenoxide, sodium phenoxide, potassium phenoxide, sodium sulfate, potassium sulfate, NaH₂PO₃, NaH₂PO₄, Na₂H₂PO₃, KH₂PO₄, CsH₂PO₄, Na₂SO₃, Na₂S₂O5, sodium mesylate, potassium mesylate, sodium tosylate, potassium tosylate, magnesium disodium ethylenediamine tetraacetate, and combinations thereof.

The method for making the composite includes optionally forming a composite precursor including the reactive fiber system and the reactive polymer composition; and heating the reactive fiber system and the thermoplastic polymer under conditions effective to form the modified thermoplastic polymer. The heating can include thermoforming, compression molding, or a combination thereof. In an aspect, the heating to form the composite does not include extruding, blow molding, rotational molding, or injection molding. It has been discovered that heating by extruding, blow molding, rotational molding, or injection molding does not provide the modified thermoplastic polymer.

The heating can be at a temperature of 200 to 370°C, at a pressure of 80 to 500 kilopascals (kPa), and for a time of 200 to 900 seconds (s). Within this combination of parameters, the temperature can be 200 to 270°C, or 210 to 270°C, or 220 to 260°C; the pressure can be 150 to 500 kPa, or 200 to 500 kPa, or 300 to 500 kPa; and the time can be 200 to 800 s, or 200 to 700 s, or 250 to 650 s. For example, the temperature can be 220 to 260°C, the pressure can be 110 to 160 kPa, and the time can be 200 to 400 s. For example, the temperature can be 225 to 270°C, the pressure can be 350 to 500 kPa, and the time can be 400 to 700 s.

Also provided is a method of manufacturing a prepreg, including coating the reactive fiber system with the reactive polymer composition. Coating can be by any suitable method, including immersing the reactive fiber system into the reactive polymer composition, spraying the reactive polymer composition onto the reactive fiber system; powder coating the reactive fiber system with the reactive polymer composition, layering a film of the reactive polymer composition on the reactive fiber system; or a combination thereof.

The prepreg can be prepared in any form, where the form can be determined by the shape of the reactive fiber system. In an aspect, the reactive fiber system can be arranged or shaped into a fiber preform. As used herein, the term "fiber preform" refers to the reactive fiber system being arranged in a specified configuration prior to being subjected to the operation or operations that will coat the reactive fiber system with the reactive polymer composition. Examples of fiber preforms include, but are not limited to, a woven fabric, a unidirectional tape, a tailored fiber preform, a fiber layup structure, one or more wound filaments, an automatic tape laying structure, or a shaped fiber structure member.

Laminates can be prepared by contacting at least two layers of a prepreg under conditions of heat and pressure sufficient to consolidate the prepreg. In an aspect, a prepreg includes from one to one hundred layers of the laminate. In another aspect, all the layers of the laminate are formed from the prepreg. In still another aspect, the laminate can include other layers, for example a different prepreg. In some aspects, all the prepreg layers used to form the laminate are the prepregs produced as described herein.

In an aspect, a non-prepreg layer can be present such as a release layer, a copper foil, or an adhesive to enhance bonding between two layers. The adhesive can be applied using any suitable method, for example, spreading, spraying, and dipping. The adhesive can be any adhesive that provides the desired adhesion between layer(s) of the prepregs or tapes. An adhesive can be polyvinylbutyral (PVB), ethylene-vinyl acetate copolymer (EVA), an epoxy, an ultraviolet (UV) or water-curable adhesive such as a cyanoacrylate or other acrylic, or a combination thereof.

In an aspect, the prepreg is a tape that includes a plurality of unidirectional fibers of the reactive fiber system. In aspect, the tape can include continuous unidirectional fibers. In forming laminates from the tapes, the continuous unidirectional fibers of the tapes can be oriented with substantially parallel fibers, where the fibers of one layer are parallel, or more parallel than perpendicular with the fibers of another layer. Alternatively, the continuous unidirectional fiber tapes can be oriented with substantially non-parallel fibers, where the fibers of one layer are less parallel than perpendicular with the fibers of another layer.

In an aspect, the laminate or prepreg is added to the surface of a foam or honeycomb structure, and can also include a decorative foil or film.

In an aspect, the composite is as laminate and the forming includes contacting the reactive fiber system with the reactive polymer composition, thermoforming to form a prepreg, and laminating a plurality of prepregs by thermoforming. The modified thermoplastic polymer can be formed during prepreg formation, during laminate formation, or both.

The term "thermoforming" is used to describe a method that can include the sequential or simultaneous heating and forming of a material onto a mold, wherein the material is originally in the form of a film, sheet, layer, or the like, and can then be formed into a desired shape. Once the desired shape has been obtained, the formed article (e.g., a composite, a prepreg, or a laminate) is cooled below its melt or glass transition temperature.

Exemplary thermoforming methods can include, but are not limited to, mechanical forming such as matched tool forming, calendaring rolls, double belt laminators, indexing presses, multiple daylight presses or the like, membrane assisted pressure/vacuum forming, membrane assisted pressure/vacuum forming with a plug assist, or a combination thereof.

In an aspect, the flexural modulus of the composite is greater than the flexural modulus of a comparable composite that does not include the modified thermoplastic polymer. In an aspect, the flexural modulus of the composite is 10 to 100% greater than, or 20 to 100% greater than, or 30 to 100% greater than the flexural modulus of the comparable composite that does not include the modified thermoplastic polymer. For example, the composite can have a flexural modulus of 3,00 to 10,000 megapascal (MPa), or 3,500 to 10,000 MPa, or 4,500 to 10,000 MPa, as determined according to ISO 527.

In an aspect, the maximum stress of the composite is greater than the maximum stress of a comparable composite that does not include the modified thermoplastic polymer. In an aspect, the maximum stress of the composite is 10 to 80% greater than, or 15 to 80% greater than, or 20 to 80% greater than the maximum stress of the comparable composite that does not include the modified thermoplastic polymer. For example, the composite can have a maximum stress of 75 to 150 megapascal (MPa), or 80 to 150 MPa, or 90 to 150 MPa, as determined according to ISO 527.

As used herein, the "comparable composite" refers to a composite prepared from fiber system and the thermoplastic polymer, where the fiber system includes the non-woven fiber and a binder, where the thermoplastic polymer is the same as in the reactive polymer composition, where the binder does not include a binder reactive functional group, and the comparable composite is prepared under the same conditions as the disclosed composite. Accordingly, the comparable composite does not include the modified thermoplastic polymer.

Also provided is an article including the composite as described herein. In an aspect, the article can be a mass transit component, an energy storage device, a computer device, a household appliance, an electrical component, a recreational component, a decoration device, an electromagnetic interference device, a printed circuit, a cellular antenna device, a cellphone component, an automotive component, a military component, an industrial component, a building component, a construction component, a marine component, an aerospace component, a medical component, a sensor component, a shielding component, an RF component, or a combination thereof. It is to be understand that the descriptions for the articles above may overlap, and thus, for example, an article can be both an RF component and a sensor component.

Exemplary articles that can be prepared from the composites include, for example, acid bath containers; neutralization tanks; aircraft components; bridge beams; bridge deckings; electrolytic cells; exhaust stacks; scrubbers; sporting equipment; stair cases; walkways; automobile exterior panels such as hoods and trunk lids; floor pans; air scoops; pipes and ducts, including heater ducts; industrial fans, fan housings, and blowers; industrial mixers; boat hulls and decks; marine terminal fenders; tiles and coatings; building panels; business machine housings; trays, including cable trays; concrete modifiers; dishwasher and refrigerator parts; electrical encapsulants; electrical panels; tanks, including electrorefining tanks, water softener tanks, fuel tanks, and various filament-wound tanks and tank linings; furniture; garage doors; gratings; protective body gear; luggage; outdoor motor vehicles; pressure tanks; printed circuit boards; optical waveguides; radomes; railings; railroad parts such as tank cars; hopper car covers; car doors; truck bed liners; satellite dishes; signs; solar energy panels; telephone switchgear housings; tractor parts; transformer covers; truck parts such as fenders, hoods, bodies, cabs, and beds; insulation for rotating machines including ground insulation, turn insulation, and phase separation insulation; commutators; core insulation and cords and lacing tape; drive shaft couplings; propeller blades; missile components; rocket motor cases; wing sections; sucker rods; fuselage sections; wing skins and flarings; engine narcelles; cargo doors; tennis racquets; golf club shafts; fishing rods; skis and ski poles; bicycle parts; transverse leaf springs; pumps, such as automotive smog pumps; electrical components, embedding, and tooling, such as electrical cable joints; wire windings and densely packed multi-element assemblies; sealing of electromechanical devices; battery cases; resistors; fuses and thermal cutoff devices; coatings for printed wiring boards; casting items such as capacitors, transformers, crankcase heaters; small molded electronic parts including coils, capacitors, resistors, and semiconductors; as a replacement for steel in chemical processing, pulp and paper, power generation, and wastewater treatment; scrubbing towers; pultruded parts for structural applications, including structural members, gratings, and safety rails; swimming pools, swimming pool slides, hot-tubs, and saunas; drive shafts for under the hood applications; dry toners for copying machines; marine tooling and composites; heat shields; submarine hulls; prototype generation; development of experimental models; laminated trim; drilling fixtures; bonding jigs; inspection fixtures; industrial metal forming dies; aircraft stretch block and hammer forms; vacuum molding tools; flooring, including flooring for production and assembly areas, clean rooms, machine shops, control rooms, laboratories, parking garages, freezers, coolers, and outdoor loading docks; electrically conductive compositions for antistatic applications; for decorative flooring; expansion joints for bridges; injectable mortars for patch and repair of cracks in structural concrete; grouting for tile; machinery rails; metal dowels; bolts and posts; repair of oil and fuel storage tanks, and numerous other articles.

In an aspect, a composite includes the product of the reactive fiber system and the reactive polymer composition derived from 10 to 80 wt%, preferably 10 to 60 wt%, more preferably 10 to 50 wt% of the reactive fiber system, each based on the total weight of the reactive fiber system and the reactive polymer composition used to prepare the product. In this aspect, the reactive fiber system includes the non-woven fiber and the binder including the binder reactive functional group, preferably wherein the binder reactive functional group is hydroxyl, carboxyl, carboxylic anhydride, haloformyl, epoxy, silanol, amino, mercapto, vinyl, or a combination thereof. In this aspect, the reactive fiber system is derived from a non-woven fiber and 1 to 20 wt%, preferably 3 to 15 wt%, more preferably 5 to 15 wt% of the binder, based on the total weight of the non-woven fiber and the binder. In this aspect, an end group, a pendant moiety, a polymer backbone functional group, or a combination thereof of the thermoplastic polymer includes the polymer reactive group, and the modified thermoplastic polymer includes a covalent bond between the polymer reactive group and the reactive fiber system. In this aspect, PVA is a preferred binder and the thermoplastic polymer is preferably a polyester, polycarbonate, polyamide, polyurethane, polyurea, a random or block poly(carbonate ester), poly(carbonate ether), poly(ester ether), poly(carbonate ether ester), poly(ester amide), poly(ester ether amide), poly(carbonate amide), poly(carbonate ether amide), poly(ester urethane), poly(ester ether-urethane), poly(carbonate urethane), poly(carbonate ether urethane), poly(ester urea), poly(ester ether urea), poly(carbonate urea), poly(carbonate ether urea), poly(ether amide), poly(amide urethane), poly(amide urea), poly(urethane urea), poly(arylene ether), or a combination thereof.

In a method of making the composite of these aspects, the reactive fiber system and the reactive polymer composition are heated by thermoforming, compression molding, or a combination thereof at a temperature of 200 to 280°C, at a pressure of 80 to 500 kPa, and for a time of 200 to 900 seconds, to form the modified thermoplastic polymer, i.e., conditions effective to react the binder reactive functional group and the polymer reactive group to form the modified thermoplastic polymer.

Preferred articles including the composite of these aspects, or made by the foregoing method, include a mass transit component, an energy storage device, a computer device, a household appliance, an electrical component, a recreational component, a decoration device, an electromagnetic interference device, a printed circuit, a cellular antenna device, a cellphone component, an automotive component, a military component, an industrial component, a building component, a construction component, a marine component, an aerospace component, a medical component, a sensor component, a shielding component, or an RF component.

In other aspects, the reactive polymer composition includes a thermoplastic polymer that is reactive with the binder reactive functional group. The composite includes a modified thermoplastic polymer including a reaction product of the thermoplastic polymer and the binder reactive functional group. For example, the modified thermoplastic polymer can be derived from the reaction of the thermoplastic polymer and the binder reactive functional group via chain scission of the thermoplastic polymer backbone to form the covalent bond. For example, the covalent bond can be formed between, or can be between, a residue derived from the binder reactive functional group and the polymer backbone of the thermoplastic polymer. In an aspect, the modified thermoplastic polymer includes a reaction product of the polymer reactive group and the binder reactive functional group, a reaction product of the thermoplastic polymer and the binder reactive functional group, or a combination thereof.

This disclosure is further illustrated by the following examples, which are nonlimiting.

### EXAMPLES

The materials listed in Table 1 were used in the examples.

**Table 1**

| Material | Description | Source |
|---|---|---|
| PEI | BPA-polyetherimide film, having a thickness of 125 µm, a Mw of 53,100 g/mol by GPC, and at least 300 ppm of anhydride end groups (obtained as ULTEM 1000B) | SABIC |
| CF1 | Wet-laid non-woven carbon fiber mat, having a surface density of 50 g/m², a fiber diameter of 7 µm, and containing 10-15 wt% of a polyvinyl alcohol binder (obtained as OPTIMAT 20301A) | Technical Fibre Products |
| CF2 | Wet-laid non-woven carbon fiber mat, having a surface density of 50 g/m², a fiber diameter of 7 µm, and containing 10-15 wt% of a styrene-acrylic binder (obtained as OPTIMAT 20352A) | Technical Fibre Products |

Molecular weight was determined by gel permeation chromatography (GPC) using a cross-linked styrene-divinylbenzene column. Molecular weight was calibrated to polycarbonate references using an ultraviolet-visible detector at 254 nm. For the composite laminates, a three point bending tests were performed on parts having a length of 50 mm, a width of 10 mm and a thickness of 4 mm. The cross-head speed was 2 mm/min. Flexural properties were determined at 23°C in accordance with ISO-178. Tensile properties were measured according to ISO-527 on a sample having a thickness of 4 mm.

Laminate composite samples were prepared by sandwiching a non-woven carbon fiber mat between two polycarbonate (PC1, M_{w} of 29,400 g/mol) films to form a laminate. The laminate was subsequently thermoformed using a film laminator (OASYS TECHNOLOGIES LTD) according to the multi-step press conditions in Table 2.

**Table 2**

| Press Conditions | | | |
|---|---|---|---|
| Step | Temp (°C) | Pressure (kPa) | Time (s) |
| 1 | 255 | 414 | 1 |
| 2 | 255 | 414 | 600 |
| 3 | 255 | 414 | 1 |
| 4 | 255 | 414 | 1 |
| 5 | 40 | 276 | - |

The laminate composite of Example 1 was prepared using a carbon fiber mat including a reactive polyvinyl alcohol binder (CF1). The laminate composite of Comparative Example 2 was prepared using a carbon fiber mat including a non-reactive styrene-acrylic binder (CF2).

Table 3 shows the properties of Example 1 and Comparative Example 2 after processing.

**Table 3**

| Property | Units | 1 | 2 |
|---|---|---|---|
| Binder | - | Reactive | Non-reactive |
| Flexural Modulus (FM) | MPa | 5590 | 3997 |
| Maximum Stress at yield (Stress) | MPa | 95.4 | 74.8 |
| ΔFM vs. Comparative Example 2 | % | +40 | - |
| ΔStress vs. Comparative Example 2 | % | +28 | - |
| M_{w} | g/mol | 52000 | 52400 |
| Mₙ | g/mol | 18000 | 18200 |
| ΔM_{W} | g/mol | -1100 | -700 |

As shown in Table 3, the mechanical properties of the laminate composite including the reactive binder (Example 1) were superior to those of the laminate composite including the non-reactive binder (Comparative Example 2). Both Example 1 and Comparative Example 2 had similar M_{w} and neither showed significant changes to M_{w} from the lamination process. Without being bound by theory, the increased mechanical properties were the result of the chemical reaction between the reactive binder and the anhydride end groups of the polyetherimide.

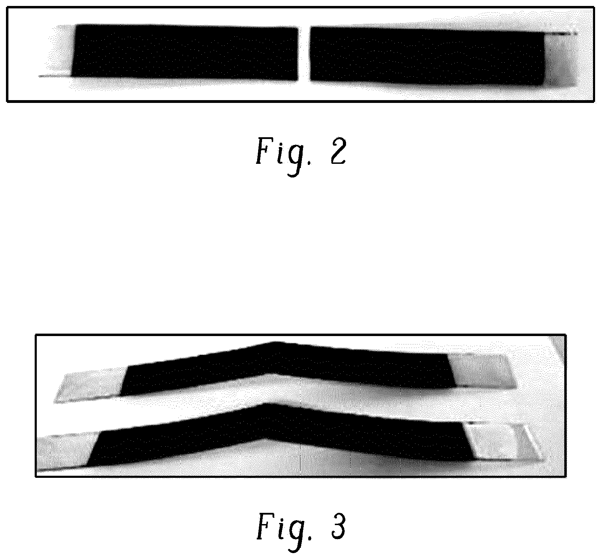

FIG. 1 shows the results of a bending test performed on the laminate composite of Example 1, where the laminate composite was snapped apart under the high pressure of the bending test. FIG. 2 shows the result of a bending test performed on the laminate composite of Example 2, where the laminate composite buckled under the pressure of the bending test. The pressure required to snap the laminate composite of Example 1 exceeded the pressure required to buckle the laminate composite of Example 2.

This disclosure further encompasses the following Aspects.
Aspect 1. A composite including a product of a reactive fiber system and a reactive polymer composition, wherein the reactive fiber system includes: a non-woven fiber; and a binder including a binder reactive functional group, and the reactive polymer composition includes a thermoplastic polymer including a polymer reactive group, wherein the polymer reactive group is reactive with the binder reactive functional group; and wherein the composite includes a modified thermoplastic polymer including a reaction product of the polymer reactive group and the binder reactive functional group.
Aspect 2. The composite of Aspect 1, wherein a weight average molecular weight of the modified thermoplastic polymer is substantially the same as, preferably within 5% of, more preferably within 3% of, the weight average molecular weight of the thermoplastic polymer, as determined by gel permeation chromatography; and a flexural modulus of the composite is greater than a flexural modulus of a comparable composite that does not comprise the modified thermoplastic polymer, as determined according to ISO 527.
Aspect 3. The composite of Aspect 1 or 2, wherein an end group, a pendant moiety, a polymer backbone functional group, or a combination thereof of the thermoplastic polymer includes the polymer reactive group, and wherein the modified thermoplastic polymer includes a covalent bond between the polymer reactive group and the reactive fiber system.
Aspect 4. The composite of any one of the preceding Aspects, wherein the modified thermoplastic polymer is derived from reaction of the polymer reactive group and the binder reactive functional group to form a covalent bond.
Aspect 5. The composite of any one of the preceding Aspects, wherein the non-woven fiber is a mineral fiber, a plant fiber, a synthetic fiber, or a combination thereof; preferably wherein the non-woven fiber is glass fiber, glass wool fiber, mineral wool fiber, slag wool fiber, stone wool fiber, basalt fiber, silica fiber, quartz fiber, alumina fiber, steel fiber, silicon carbide fiber, acrylic fiber, carbon fiber, melamine fiber, polyester fiber, polyethylene fiber, polyethylene terephthalate fiber, polylactic acid fiber, polypropylene fiber, polyamide fiber, polyaramid fiber, polyimide fiber, polyphenylene sulfide fiber, polytetrafluoroethylene fiber, cellulosic fiber, cotton fiber, jute fiber, kenaf fiber, bamboo fiber, hemp fiber, linen fiber, flax fiber, or a combination thereof.
Aspect 6. The composite of any one of the preceding Aspects, wherein the binder reactive functional group is hydroxyl, carboxyl, carboxylic anhydride, haloformyl, epoxy, silanol, amino, mercapto, vinyl, or a combination thereof; preferably wherein the binder includes polyvinyl alcohol.
Aspect 7. The composite of any one of the preceding Aspects, wherein the polymer reactive group is anhydride, amino, hydroxyl, halogen, thiol, aldehyde, C₁₋₆ alkyl ester, carboxyl, epoxy, isocyanate, vinyl, alkynyl, or a combination thereof; preferably wherein the polymer reactive group is anhydride, amino, hydroxyl, or a combination thereof.
Aspect 8. The composite of any one of the preceding Aspects, wherein the composite includes 20 to 90 wt% of the modified thermoplastic polymer, preferably 30 to 90 wt% of the modified thermoplastic polymer, each based on the total weight of the reactive polymer composition and the modified thermoplastic polymer.
Aspect 9. The composite of any one of the preceding Aspects, wherein the product of the reactive fiber system and the reactive polymer composition is derived from 10 to 80 wt%, preferably 10 to 60 wt%, more preferably 10 to 50 wt% of the reactive fiber system, each based on the total weight of the reactive fiber system and the reactive polymer composition used to prepare the product.
Aspect 10. The composite of any one of the preceding Aspects, wherein the reactive fiber system is derived from the non-woven fiber and 1 to 20 wt%, preferably 3 to 15 wt%, more preferably 5 to 15 wt% of the binder, each based on the total weight of the non-woven fiber and the binder.
Aspect 11. The composite of any one of the preceding Aspects, wherein the thermoplastic polymer is polycarbonate, polyacetal, poly(C₁₋₆ alkyl)acrylate, polyacrylamide, polyamide, polyamideimide, polyanhydride, polyarylate, polyarylene ether, polyarylene sulfide, polyarylene sulfone, polybenzothiazole, polybenzoxazole, polyester, polyetheretherketone, polyetherimide, polyetherketoneketone, polyetherketone, polyethersulfone, polyimide, poly(C₁₋₆ alkyl)methacrylate, polymethacrylamide, polynorbornene, polyolefin, polyoxadiazole, polyoxymethylene, polyphthalide, polysilazane, polysiloxane, polystyrene, polysulfide, polysulfonamide, polysulfonate, polysulfone, polythioester, polytriazine, polyurea, polyurethane, polyvinyl alcohol, polyvinyl ester, polyvinyl ether, polyvinyl halide, polyvinyl ketone, polyvinyl thioether, polyvinylidene fluoride, a copolymer thereof, or a combination thereof; preferably wherein the thermoplastic polymer is polyimide; more preferably wherein the thermoplastic polymer is polyetherimide.
Aspect 12. A method of making the composite of any one of the preceding Aspects, the method including: heating the reactive fiber system and the reactive polymer composition under conditions effective to form the modified thermoplastic polymer.
Aspect 13. The method of Aspect 12 wherein the heating is effective to react the binder reactive functional group and the polymer reactive group to form the modified thermoplastic polymer, and wherein the modified thermoplastic polymer includes a covalent bond to the reactive fiber system.
Aspect 14. The method of any one of Aspects 12 to 13, wherein the heating includes thermoforming, compression molding, or a combination thereof; preferably wherein the heating includes thermoforming, compression molding, or a combination thereof at a temperature of 200 to 280°C, at a pressure of 80 to 500 kPa, and for a time of 200 to 900 seconds.
Aspect 15. An article including the composite of any one of Aspects 1 to 11 or made by the method of any one of Aspects 12 to 14; preferably wherein the article is a mass transit component, an energy storage device, a computer device, a household appliance, an electrical component, a recreational component, a decoration device, an electromagnetic interference device, a printed circuit, a cellular antenna device, a cellphone component, an automotive component, a military component, an industrial component, a building component, a construction component, a marine component, an aerospace component, a medical component, a sensor component, a shielding component, an RF component, or a combination thereof.

The compositions, methods, and articles can alternatively include, consist of, or consist essentially of, any appropriate materials, steps, or components herein disclosed. The compositions, methods, and articles can additionally, or alternatively, be formulated to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other (e.g., ranges of "up to 25 wt%, or 5 to 20 wt%", is inclusive of the endpoints and all intermediate values of the ranges of "5 to 25 wt%," etc.). "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity and are to be construed to cover both the singular and the plural, unless otherwise indicated herein or clearly contradicted by context. "Or" means "and/or" unless clearly stated otherwise. Reference throughout the specification to "some aspects", "an aspect", and so forth, means that a particular element described in connection with the aspect is included in at least one aspect described herein, and may or may not be present in other aspects. In addition, it is to be understood that the described elements may be combined in any suitable manner in the various aspects. A "combination thereof' is open and includes any combination including at least one of the listed components or properties optionally together with a like or equivalent component or property not listed.

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs. All cited patents, patent applications, and other references are incorporated herein by reference in their entirety. However, if a term in the present application contradicts or conflicts with a term in the incorporated reference, the term from the present application takes precedence over the conflicting term from the incorporated reference.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

As used herein, the term "hydrocarbyl" includes groups containing carbon, hydrogen, and optionally one or more heteroatoms (e.g., 1, 2, 3, or 4 atoms such as halogen, O, N, S, P, or Si). "Alkyl" means a branched or straight chain, saturated, monovalent hydrocarbon group, e.g., methyl, ethyl, i-propyl, and n-butyl. "Alkylene" means a straight or branched chain, saturated, divalent hydrocarbon group (e.g., methylene (-CH2-) or propylene (-(CH₂)₃-)). "Alkenyl" and "alkenylene" mean a monovalent or divalent, respectively, straight or branched chain hydrocarbon group having at least one carbon-carbon double bond (e.g., ethenyl (-HC=CH₂) or propenylene (-HC(CH₃)=CH₂-). "Alkynyl" means a straight or branched chain, monovalent hydrocarbon group having at least one carbon-carbon triple bond (e.g., ethynyl). "Alkoxy" means an alkyl group linked via an oxygen (i.e., alkyl-O-), for example methoxy, ethoxy, and sec-butyloxy. "Cycloalkyl" and "cycloalkylene" mean a monovalent and divalent cyclic hydrocarbon group, respectively, of the formula -CₙH₂ₙ₋ₓ and -CₙH₂ₙ₋₂ₓ- wherein x is the number of cyclization(s). "Aryl" means a monovalent, monocyclic, or polycyclic aromatic group (e.g., phenyl or naphthyl). "Arylene" means a divalent, monocyclic, or polycyclic aromatic group (e.g., phenylene or naphthylene). "Arylene" means a divalent aryl group. "Alkylaryl" means an aryl group substituted with an alkyl group. "Arylalkyl" means an alkyl group substituted with an aryl group (e.g., benzyl). The prefix "halo" means a group or compound including one more halogen (F, Cl, Br, or I) substituents, which can be the same or different. The prefix "hetero" means a group or compound that includes at least one ring member that is a heteroatom (e.g., 1, 2, or 3 heteroatoms, wherein each heteroatom is independently N, O, S, or P.

Unless substituents are otherwise specified, each of the foregoing groups can be unsubstituted or substituted, provided that the substitution does not significantly adversely affect synthesis, stability, or use of the compound. "Substituted" means that the compound, group, or atom is substituted with at least one (e.g., 1, 2, 3, or 4) substituents instead of hydrogen, where each substituent is independently nitro (-NO₂), cyano (-CN), hydroxy (-OH), halogen, thiol (-SH), thiocyano (-SCN), C₁₋₆ alkyl, C₂₋₆ alkenyl, C₂₋₆ alkynyl, C₁₋₆ haloalkyl, C₁₋₉ alkoxy, C₁₋₆ haloalkoxy, C₃₋₁₂ cycloalkyl, C₅₋₁₈ cycloalkenyl, C₆₋₁₂ aryl, C₇₋₁₃ arylalkyl (e.g., benzyl), C₇₋₁₂ alkylaryl (e.g., toluyl), C₄₋₁₂ heterocycloalkyl, C₃₋₁₂ heteroaryl, C₁₋₆ alkyl sulfonyl (-S(=O)₂-alkyl), C₆₋₁₂ arylsulfonyl (-S(=O)₂-aryl), or tosyl (CH₃C₆H₄SO₂-), provided that the substituted atom's normal valence is not exceeded. When a compound is substituted, the indicated number of carbon atoms is the total number of carbon atoms in the compound or group, including those of any substituents.

While particular aspects have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A composite comprising a product of a reactive fiber system and a reactive polymer composition, wherein
the reactive fiber system comprises:
a non-woven fiber; and
a binder comprising a binder reactive functional group, and
the reactive polymer composition comprises a thermoplastic polymer comprising a polymer reactive group, wherein the polymer reactive group is reactive with the binder reactive functional group; and
wherein the composite comprises a modified thermoplastic polymer comprising a reaction product of the polymer reactive group and the binder reactive functional group.

2. The composite of claim 1, wherein a flexural modulus of the composite is greater than a flexural modulus of a comparable composite prepared from a binder that does not comprise the binder reactive functional group and that does not comprise the modified thermoplastic polymer, as determined according to ISO 527.

3. The composite of claim 1 or 2, wherein an end group, a pendant moiety, a polymer backbone functional group, or a combination thereof of the thermoplastic polymer comprises the polymer reactive group, and wherein the modified thermoplastic polymer comprises a covalent bond between the polymer reactive group and the reactive fiber system.

4. The composite of any one of the preceding claims, wherein the modified thermoplastic polymer is derived from reaction of the polymer reactive group and the binder reactive functional group to form a covalent bond.

5. The composite of any one of the preceding claims, wherein the non-woven fiber is a mineral fiber, a plant fiber, a synthetic fiber, or a combination thereof;
preferably wherein the non-woven fiber is glass fiber, glass wool fiber, mineral wool fiber, slag wool fiber, stone wool fiber, basalt fiber, silica fiber, quartz fiber, alumina fiber, steel fiber, silicon carbide fiber, acrylic fiber, carbon fiber, melamine fiber, polyester fiber, polyethylene fiber, polyethylene terephthalate fiber, polylactic acid fiber, polypropylene fiber, polyamide fiber, polyaramid fiber, polyimide fiber, polyphenylene sulfide fiber, polytetrafluoroethylene fiber, cellulosic fiber, cotton fiber, jute fiber, kenaf fiber, bamboo fiber, hemp fiber, linen fiber, flax fiber, or a combination thereof.

6. The composite of any one of the preceding claims, wherein the binder reactive functional group is hydroxyl, carboxyl, carboxylic anhydride, haloformyl, epoxy, silanol, amino, mercapto, vinyl, or a combination thereof; preferably wherein the binder comprises polyvinyl alcohol.

7. The composite of any one of the preceding claims, wherein the polymer reactive group is anhydride, amino, hydroxyl, halogen, thiol, aldehyde, C₁₋₆ alkyl ester, carboxyl, epoxy, isocyanate, vinyl, alkynyl, or a combination thereof; preferably wherein the polymer reactive group is anhydride, amino, hydroxyl, or a combination thereof.

8. The composite of any one of the preceding claims, wherein the composite comprises 5 to 90 wt% of the modified thermoplastic polymer, preferably 15 to 90 wt% of the modified thermoplastic polymer, each based on the total weight of the reactive polymer composition and the modified thermoplastic polymer.

9. The composite of any one of the preceding claims, wherein the product of the reactive fiber system and the reactive polymer composition is derived from 10 to 80 wt%, preferably 10 to 60 wt%, more preferably 10 to 50 wt% of the reactive fiber system, each based on the total weight of the reactive fiber system and the reactive polymer composition used to prepare the product.

10. The composite of any one of the preceding claims, wherein the reactive fiber system is derived from the non-woven fiber and 1 to 20 wt%, preferably 3 to 15 wt%, more preferably 5 to 15 wt% of the binder, each based on the total weight of the non-woven fiber and the binder.

11. The composite of any one of the preceding claims, wherein the thermoplastic polymer is polycarbonate, polyacetal, poly(C₁₋₆ alkyl)acrylate, polyacrylamide, polyamide, polyamideimide, polyanhydride, polyarylate, polyarylene ether, polyarylene sulfide, polyarylene sulfone, polybenzothiazole, polybenzoxazole, polyester, polyetheretherketone, polyetherimide, polyetherketoneketone, polyetherketone, polyethersulfone, polyimide, poly(C₁₋₆ alkyl)methacrylate, polymethacrylamide, polynorbornene, polyolefin, polyoxadiazole, polyoxymethylene, polyphthalide, polysilazane, polysiloxane, polystyrene, polysulfide, polysulfonamide, polysulfonate, polysulfone, polythioester, polytriazine, polyurea, polyurethane, polyvinyl alcohol, polyvinyl ester, polyvinyl ether, polyvinyl halide, polyvinyl ketone, polyvinyl thioether, polyvinylidene fluoride, a copolymer thereof, or a combination thereof; preferably wherein the thermoplastic polymer is polyimide; more preferably wherein the thermoplastic polymer is polyetherimide.

12. A method of making the composite of any one of the preceding claims, the method comprising: heating the reactive fiber system and the reactive polymer composition under conditions effective to form the modified thermoplastic polymer.

13. The method of claim 12 wherein the heating is effective to react the binder reactive functional group and the polymer reactive group to form the modified thermoplastic polymer, and wherein the modified thermoplastic polymer comprises a covalent bond to the reactive fiber system.

14. The method of any one of claims 12 to 13, wherein the heating comprises thermoforming, compression molding, or a combination thereof; preferably wherein the heating comprises thermoforming, compression molding, or a combination thereof at a temperature of 200 to 370°C, at a pressure of 80 to 500 kPa, and for a time of 200 to 900 seconds.

15. An article comprising the composite of any one of claims 1 to 11 or made by the method of any one of claims 12 to 14;
preferably wherein the article is a mass transit component, an energy storage device, a computer device, a household appliance, an electrical component, a recreational component, a decoration device, an electromagnetic interference device, a printed circuit, a cellular antenna device, a cellphone component, an automotive component, a military component, an industrial component, a building component, a construction component, a marine component, an aerospace component, a medical component, a sensor component, a shielding component, an RF component, or a combination thereof.
